# EUROPEAN PATENT APPLICATION

(11) **EP 1 868 012 A1**
(43) Date of publication of application: **19.12.2007**
(21) Application number: 06731371.8
(22) Date of filing: 07.04.2006
(51) Int. Cl.: G02B 1/10, B05D 7/24, C09D 185/00

(54) **COATING AGENT FOR OPTICAL INSTRUMENT**

(30) Priority: 07.04.2005 JP 2005111458; 23.06.2005 JP 2005183889; 28.12.2005 JP 2005380102
(71) Applicant: Kao Corporation, Chuo-ku Tokyo 103-8210 (JP)
(72) Inventor: SASAKI, Yasushi, c/o Kao Corp. Research Laboratories, Wakayama 640-8580 (JP); KASHIHARA, Eiji, c/o Kao Corp. Research Laboratories, Wakayama 640-8580 (JP); KINUTA, Kouji, Kao Corp. Research Laboratories, Wakayama 640-8580 (JP); HOSOKAWA, Hiroji, Kao Corp. Research Laboratories, Wakayama 640-8580 (JP)
(74) Representative: HOFFMANN EITLE
(86) International application number: PCT/JP2006/307424
(87) International publication number: WO 2006/109705

(57) **Abstract**

To provide a coating agent capable of forming a coating film having high hardness, high rubbing resistance, and strong adhesibility, without necessitating a high-temperature treatment as in a conventional method, even when titanium oxide having a high refractive index is used and a process for producing the coating agent; a coating film formed by applying the above-mentioned coating agent and a process for producing the coating film; and an optical instrument comprising the above-mentioned coating film and a process for producing the optical instrument.

A coating agent for an optical instrument, obtainable under the conditions where one or more titanium sources selected from the group consisting of titanium alkoxides and titanium salts, a nitrogen-containing organic base, and water are co-present; a coating agent for an optical instrument, obtainable by mixing a hydrolyzed solution of one or more titanium sources selected from the group consisting of titanium alkoxides and titanium salts, and a nitrogen-containing organic base; and a coating agent for an optical instrument, obtainable by hydrolyzing one or more titanium sources selected from the group consisting of titanium alkoxides and titanium salts, in the presence of a nitrogen-containing organic base.

## Description

### TECHNICAL FIELD

The present invention relates to a coating agent for an optical instrument. More specifically, the present invention relates to a coating agent for an optical instrument such as lenses for spectacles, lenses for cameras, filters for CRTs, and substrates for optical recording, a coating film for an optical instrument made of the coating agent for an optical instrument and a process for producing the coating film, and an optical instrument comprising the coating film for an optical instrument and a process for producing the optical instrument.

### BACKGROUND ART

As optical materials usable in an optical instrument represented by lenses, in addition to conventionally used inorganic glass, plastics have been used in recent years as a substitute material therefor from the viewpoint of easiness in workability and production efficiency.

Among the plastics, transparent plastics represented by polycarbonates and polymethyl methacrylates have been widely used as a substitute for the inorganic glass because of their advantages such as lightweight, easiness in workability, and impact resistance. As compared to the inorganic glass, however, these transparent plastics have some disadvantages such as the transparent plastics are not sufficient in hardness, more likely to be damaged, more likely to be penetrated by a solvent, more easily adsorb dust upon charging, more easily deteriorate with light, likely to be colored, and the like. Therefore, there are many technological disadvantages actually yet to be solved for applying the transparent plastics to a sheet-like material such as window glass.

In an aim of improving these technological disadvantages, for example, a process including the step of subjecting a surface of a plastic substrate to vacuum deposition with a specified inorganic substance, or coating with an organic polymer, for the purpose of improving rubbing resistance and chemical resistance (see, for example, Patent Publication 1); a process including the step of adding fine inorganic particles such as fine silica particles to a coating film in order to improve rubbing resistance (see, for example, Patent Publication 2); or the like has been proposed.

In addition, regarding the material for optical lenses, it has been considered that organic glass comprising plastics has a lower refractive index as compared to that of the conventional inorganic glass, so that an edge side of the optical lenses becomes thicker, thereby making it unsuitable for the lenses for heavy visual correction. In recent years, the refractive index of the organic glass has been improved, and organic glass having a refractive index of about 1.7 has been developed.

In order to stabilize or improve a refractive index of the organic glass, blending a specified inorganic compound, for example, fine particles made of titanium oxide or the like, in organic glass has been tried. While titanium oxide itself provides a high refractive index, titanium oxide has photocatalytic activity that gives rise to a technological disadvantage such as the organic glass is discolored. Therefore, in order to overcome the above-mentioned technological disadvantage, fine particles made of composite titanium oxide in which fine particles of titanium oxide are covered with an inorganic compound having no photocatalytic activity (see, for example, Patent Publication 3) have been proposed.

As titanium oxide having a different structure, a suspension containing titanium oxide having a layered structure (see, for example, Patent Publication 4), or a multi-layered ultrathin film composed of a titania nano-sheet (see, for example, Patent Publication 5) has been known.
Patent Publication 1: US-B-4294950
Patent Publication 2: JP-B-Hei 3-50774
Patent Publication 3: JP-A-2000-206305
Patent Publication 4: JP-A-Hei 9-25123
Patent Publication 5: JP-A-2001-270022

### DISCLOSURE OF INVENTION

### PROBLEMS TO BE SOLVED BY THE INVENTION

However, when inorganic particles such as fine particles of the (composite) titanium oxide mentioned above are used together with an alkoxysilane-based thermosetting resin in order to form a film having high hardness on a substrate, a high-temperature treatment is necessitated, but the treatment temperature can only be raised to a temperature near a heat-resistant temperature of the substrate. In addition, if the content of the inorganic particles is increased in order to even more increase the refractive index, a coating film having satisfactory adhesibility and high hardness cannot be obtained.

An object of the present invention is to provide a coating agent capable of forming a coating film having high hardness, high rubbing resistance, and strong adhesibility, without necessitating a high-temperature treatment as in a conventional method, even when titanium oxide having a high refractive index is used; a coating film having high hardness, high rubbing resistance, and strong adhesibility and a process for producing the coating film; and an optical instrument comprising the above-mentioned coating film and a process for producing the optical instrument.

### MEANS TO SOLVE THE PROBLEMS

The present invention relates to:
(1) a coating agent for an optical instrument, obtainable under the conditions where one or more titanium sources selected from the group consisting of titanium alkoxides and titanium salts, a nitrogen-containing organic base, and water are co-present;
(2) a coating agent for an optical instrument, obtainable by mixing a hydrolyzed solution of one or more titanium sources selected from the group consisting of titanium alkoxides and titanium salts, and a nitrogen-containing organic base;
(3) a coating agent for an optical instrument, obtainable by hydrolyzing one or more titanium sources selected from the group consisting of titanium alkoxides and titanium salts, in the presence of a nitrogen-containing organic base;
(4) a process for producing a coating agent for an optical instrument, including the step of forming a titanium-containing compound in the coexistence of one or more titanium sources selected from the group consisting of titanium alkoxides and titanium salts, a nitrogen-containing organic base, and water;
(5) a coating film for an optical instrument formed by applying the coating agent for an optical instrument as defined in any one of the above (1) to (3);
(6) an optical instrument comprising the coating film for an optical instrument as defined in the above (5);
(7) a process for producing a coating film for an optical instrument, including the step of applying the coating agent for an optical instrument as defined in any one of the above (1) to (3); and
(8) a process for producing an optical instrument comprising a coating film for an optical instrument, including the step of applying the coating agent for an optical instrument as defined in any one of the above (1) to (3).

### EFFECTS OF THE INVENTION

According to the present invention, a coating agent capable of forming a coating film having high hardness, high rubbing resistance, and strong adhesibility without necessitating a high-temperature treatment as in a conventional method, a coating film having higher hardness, higher rubbing resistance, and stronger adhesibility than that of a conventional coating agent, and an optical instrument comprising the coating film can be provided.

### BEST MODE FOR CARRYING OUT THE INVENTION

The present inventors have found that a coating agent containing a specified titanium and a nitrogen-containing organic base is suitable for a coating film for an optical instrument such as lenses for spectacles, lenses for cameras, filters for CRTs, and substrates for optical recording, and the present invention has been accomplished thereby.

The coating agent for an optical instrument of the present invention contains a titanium-containing compound obtainable under the conditions where one or more titanium sources selected from the group consisting of titanium alkoxides and titanium salts, a nitrogen-containing organic base, and water are co-present. Preferred embodiments of the coating agent for an optical instrument of the present invention include the following embodiments.

Embodiment 1: A coating agent for an optical instrument, obtainable by mixing a hydrolyzed solution of a titanium source and a nitrogen-containing organic base, and preferably a coating agent for an optical instrument, obtainable by mixing a hydrolyzed solution of a titanium source and a nitrogen-containing organic base, and thereafter mixing the resulting mixture and a hydroxycarboxylic acid and/or a silane compound.

Embodiment 2: A coating agent for an optical instrument, obtainable by hydrolyzing a titanium source in the presence of a nitrogen-containing organic base, and preferably a coating agent for an optical instrument, obtainable by hydrolyzing a titanium source in the presence of a nitrogen-containing organic base, and thereafter mixing the resulting hydrolysate and a hydroxycarboxylic acid and/or a silane compound.

The embodiment 2 further includes those obtainable by the following processes. (Process A) A process including the step of adding water to a mixture of a nitrogen-containing organic base and a titanium source, and preferably a process including the steps of adding water to a mixture of a nitrogen-containing organic base and a titanium source, and mixing the resulting liquid mixture and a hydroxycarboxylic acid and/or a silane compound. (Process B) A process including the step of mixing an aqueous solution of a nitrogen-containing organic base and a titanium source, thereby hydrolyzing the titanium source, and preferably a process including the steps of mixing an aqueous solution of a nitrogen-containing organic base with a titanium source thereby hydrolyzing the titanium source, and thereafter mixing the resulting hydrolysate and a hydroxycarboxylic acid and/or a silane compound.

### < Raw Materials for the Coating Agent >

Each of the titanium alkoxides and the titanium salts can be used alone or in combination. It is preferable that the titanium alkoxide and the titanium salt are a titanium-containing compound that generates titanium hydroxide by hydrolysis. The titanium hydroxide includes one represented by the formula of Ti(OH)₂, Ti(OH)₃, or Ti(OH)₄.

The titanium alkoxide refers to those that readily generate a titanium hydroxide by mixing with water, or mixing with water and thereafter heating the mixture.

The titanium alkoxide includes, for example, a titanium alkoxide of which alkoxide moiety has 1 to 6 carbon atoms, such as titanium tetraethoxide, titanium tetraisopropoxide, and titanium tetrabutoxide, and preferably a titanium alkoxide of which alkoxide moiety has 2 to 4 carbon atoms. These titanium alkoxides can be used alone or in admixture of two or more kinds. Among the titanium alkoxides of which alkoxide moiety has 1 to 6 carbon atoms, a titanium tetraalkoxide of which alkoxide moiety has 1 to 6 carbon atoms is preferable, a titanium tetraalkoxide of which alkoxide moiety has 2 to 4 carbon atoms is more preferable, and titanium tetraisopropoxide is even more preferable, from the viewpoint of its ease in availability and handling ability.

The titanium salt readily generates a titanium hydroxide by mixing with water, or mixing with water and thereafter heating the mixture.

The titanium salt includes, for example, titanium chlorides such as titanium tetrachloride, titanium trichloride, and titanium dichloride, titanium sulfate, titanyl sulfate, titanyl nitrate, and the like. These titanium salts can be used alone or in admixture of two or more kinds. Among them, titanium tetrachloride, titanium sulfate, and titanyl sulfate are more preferred from the viewpoint of their ease in availability and the like.

The titanium source is preferably used in the form of an organic solvent solution from the viewpoint of easiness in mixing.
The preferred organic solvent usable for the solution for the titanium source includes alcohols, and alcohols having high compatibility with the titanium source are preferable. Examples of preferred alcohols include monohydric alcohols having 1 to 8 carbon atoms, such as methyl alcohol, ethyl alcohol, isopropyl alcohol, n-butyl alcohol, and isopentyl alcohol, and the like.

The concentration of the titanium source in the organic solvent solution of titanium source is preferably from 0.1 to 25% by weight, and more preferably from 1 to 15% by weight from the viewpoint of increasing productivity, and from the viewpoint of controlling an increase in viscosity of a solution, thereby facilitating mixing.

The titanium source can be hydrolyzed by adding water to the organic solvent solution of the titanium source, or utilizing the moisture in the air.

When the titanium source is hydrolyzed, other elements including, for example, vanadium, niobium, tantalum, zirconium, aluminum, iron or the like may be allowed to coexist with the titanium source to form a composite of the titanium source and other elements.

The titanium source can be hydrolyzed in the presence of an alkali. The alkali includes, for example, alkali metal hydroxides such as sodium hydroxide and potassium hydroxide, alkaline-earth metal hydroxides such as calcium hydroxide and magnesium hydroxide, ammonia, amines given later, and the like. Among these alkalis, alkali metal hydroxides, ammonia, and amines are preferable from the viewpoint of their easiness in availability and handling ability.

The amount of water usable upon hydrolyzing the titanium source is preferably from 5- to 50-folds, and more preferably 10- to 15-folds, based on the mass of the titanium source, from the viewpoint of sufficiently generating titanium hydroxide and from the viewpoint of controlling an increase in viscosity of a solution thereof, thereby increasing production efficiency.

It is preferable that the temperature of the organic solvent solution of the titanium source upon hydrolysis and the time period required for hydrolysis are appropriately selected depending upon the kinds of the titanium source to be used.

It is considered that the nitrogen-containing organic base forms a titanate sheet structure described later in the coating agent by allowing the nitrogen-containing organic base to coexist with the hydrolyzed solution of the titanium source. By having this structure, it is considered that the coating agent of the present invention in which the nitrogen-containing organic base is used forms a coating film having high hardness.

Among the nitrogen-containing organic bases, a nitrogen-containing organic base having a boiling point of 300°C or less at a pressure of 1013 hPa is preferable, from the viewpoint of reducing the amount of the organic base remaining in a coating film, thereby forming a coating film having high hardness.

The nitrogen-containing organic base includes, for example, one or more members selected from the group consisting of primary amines, secondary amines, tertiary amines, and quaternary ammonium hydroxides.

Among the amines, one or more members selected from the group consisting of primary amines, secondary amines, and tertiary amines, each having one or more alkyl groups having 1 or more carbon atoms, or one or more alkenyl groups having of 1 or more carbon atoms, are preferable, from the viewpoint of providing excellent hardness and transparency of a coating film for an optical instrument of the present invention. The number of carbon atoms of the alkyl group or alkenyl group is preferably from 1 to 20, and more preferably from 1 to 10. The amine having an alkyl group or an alkenyl group may be a monoamine, or the amine may be a diamine, or an even higher polyamine.

Specific examples of the amine having an alkyl group or an alkenyl group include primary amines such as methylamine, ethylamine, n-propylamine, n-butylamine, n-pentylamine, n-hexylamine, n-heptylamine, n-octylamine, n-nonylamine, n-decylamine, and allylamine; secondary amines such as dimethylamine, diethylamine, di-n-propylamine, di-n-butylamine, diallylamine, azetidine, pyrrolidine, piperidine, and piperazine; tertiary amines such as trimethylamine, triethylamine, tri-n-propylamine, and tri-n-butylamine; diamines such as ethylenediamine, 1,2-propanediamine, 1,3-propanediamine, 1,2-butanediamine, 1,3-butanediamine, 1,4-butanediamine, 1,2-pentanediamine, 1,3-pentanediamine, 1,4-pentanediamine, 1,5-pentanediamine, 2,3-pentanediamine, 1,2-hexanediamine, 1,3-hexanediamine, 1,4-hexanediamine, 1,5-hexanediamine, 1,6-hexanediamine, 1,7-heptyldiamine, and 1,8-octyldiamine; alkenyl amines such as butenylamine, hexenylamine, octenylamine, and decenylamine; and the like. These amines may be used alone or in admixture of two or more kinds. Among them, secondary alkylamines such as dimethylamine, diethylamine, and di-n-propylamine and tertiary alkylamines such as triethylamine are preferable, secondary alkylamines having the number of carbon atoms of 1 to 10 and tertiary alkylamines having the number of carbon atoms of 1 to 10 are more preferable, diethylamine and di-n-propylamine are even more preferable, and diethylamine is still even more preferable, from the viewpoint of film hardness and costs.

It is preferable that the coating agent of the present invention contains a hydroxycarboxylic acid, from the viewpoint of stably dispersing in an organic solvent a titanium-containing compound formed by mixing a hydrolyzed solution of the titanium source and the nitrogen-containing organic base (hereinafter also referred to as a titanium-containing compound in the present invention).

The hydroxycarboxylic acid is a carboxylic acid having a hydroxyl group. The carboxylic acid having a hydroxyl group includes, for example, hydroxycarboxylic acids having one hydroxyl group, hydroxycarboxylic acids having two hydroxyl groups, and the like.

The hydroxycarboxylic acid having one hydroxyl group includes, for example, glycolic acid (monobasic acid), lactic acid (monobasic acid), mandelic acid (monobasic acid), malic acid (dibasic acid), citric acid (tribasic acid), and the like. These hydroxycarboxylic acids can be used alone or in admixture of two or more kinds. The hydroxycarboxylic acid having two hydroxyl groups includes glyceric acid (monobasic acid), tartaric acid (dibasic acid), and the like.

Among the hydroxycarboxylic acids, one or more members selected from the group consisting of glycolic acid, lactic acid, mandelic acid, malic acid, citric acid, glyceric acid, and tartaric acid are preferable, from the viewpoint of increasing dispersibility of the titanium-containing compound in the present invention in an organic solvent.

The amount of the hydroxycarboxylic acid, per one equivalent of the amine, is preferably 0.5 equivalents or more, and more preferably 1 equivalent or more, from the viewpoint of increasing dispersibility of the titanium-containing compound in the present invention in an organic solvent, and the amount is preferably 4 equivalents or less, and more preferably 3 equivalents or less, from the viewpoint of increasing hardness of the resulting coating film.

The equivalence of the amine refers to a value obtained by multiplying the number of moles of the amine used by the number of amino groups, and the equivalence of the hydroxycarboxylic acid refers to a value obtained by multiplying the number of moles of the hydroxycarboxylic acid used by the number of carboxylic groups.

It is preferable that the coating agent of the present invention contains a silane compound, from the viewpoint of providing a formed coating film with a stable strength.

The silane compound includes compounds that are capable of forming an organic polysiloxane, organic silicon-containing compounds, silane coupling agents, and the like.

Representative examples of the compounds that are capable of forming an organic polysiloxane include an organic silicon-containing compound represented by the following general formula (I):

R¹(R²)ₐSi(X)₃₋ₐ (I)

(wherein R¹ is an organic group having 1 to 10 carbon atoms; R² is a hydrocarbon group or a halogenated hydrocarbon group, each having 1 to 6 carbon atoms; X is a hydrolysable group; and a is 0 or 1), and/or a hydrolysate thereof. X is preferably an alkyl group or an alkoxyalkyl group, each having 1 to 4 carbon atoms, from the viewpoint of increasing curing rate and from the viewpoint of facilitating hydrolysis.

Representative examples of the organic silicon-containing compound include methyl trimethoxysilane, γ-chloropropyl trimethoxysilane, γ-glycidoxypropyl trimethoxysilane, (3,4-epoxycyclohexyl)methyl trimethoxysilane, γ-mercaptopropylmethyl dimethoxysilane, and/or a hydrolysate thereof; and the like. These organic silicon-containing compounds may be used alone or in admixture of two or more kinds. Among them, an organic silicon-containing compound having an epoxy group or a glycidoxy group is preferable, from the viewpoint of providing dyeaffinity.

Representative examples of the silane coupling agent include a silane compound represented by the following general formula (II):

Si(OR¹)₄ (II)

(wherein R¹ is an alkyl group or an alkoxyalkyl group, each having carbon atoms of 1 to 4).
Specific examples of the silane coupling agent include tetramethoxysilane, tetraethoxysilane, tetrapropoxysilane, tetrabutoxysilane, tetramethoxymethylsilane, tetraethoxyethylsilane, tetrapropoxypropylsilane, and tetrabutoxybutylsilane, and/or a hydrolysate thereof; and the like. These silane coupling agents may be used alone or in admixture of two or more kinds. Among them, tetramethoxysilane and tetraethoxysilane are preferable, from the viewpoint of increasing hardness of the coating film.

It is preferable to use the silane compound after being hydrolyzed, from the viewpoint of lowering a curing temperature, and even more accelerating curing.

Hydrolysis can also be carried out by adding pure water or an aqueous acidic solution of hydrochloric acid, acetic acid, sulfuric acid, or the like, and stirring the mixture. The extent of hydrolyzation can be readily adjusted by regulating the amount of the pure water or acidic aqueous solution.

It is preferable that the pure water or aqueous acidic solution is added upon hydrolyzation in an amount of from equimolar or more to 3-folds by mol or less that of the X group of the general formula (I), from the viewpoint of accelerating curing. It is preferable that hydrolysis is carried out in the absence of a solvent because an alcohol or the like is generated by hydrolysis. Alternatively, hydrolysis can be carried out after mixing the silane compound and a solvent, for the purpose of carrying out hydrolysis even more homogeneously.

In addition, the silane compound can be used, depending upon the purposes, after the alcohol or the like formed by hydrolysis is properly removed under heating or reduced pressure, and thereafter an appropriate solvent can be added thereto. This solvent includes, for example, alcohols, esters, ethers, ketones, halogenated hydrocarbons, aromatic hydrocarbons such as toluene and xylene, and the like. These solvents may be optionally used as a mixed solvent of two or more kinds of solvents. As an alternative, the temperature for hydrolysis may be raised to a temperature of room temperature or higher in order to accelerate hydrolytic reaction and further proceed with reactions such as pre-condensation, depending upon the purposes. The temperature for hydrolysis may be lowered to a temperature of room temperature or lower in order to suppress the pre-condensation, depending on the purposes.

The content of the silane compound in the coating agent of the present invention is preferably 1 to 50% by weight, more preferably 5 to 40% by weight, and even more preferably 10 to 30% by weight, from the viewpoint of hardness of the coating film and adhesibility of the coating film to a substrate.

### < Coating Agent of Embodiment 1 >

According to the embodiment 1, the coating agent is obtainable by mixing a hydrolyzed solution of a titanium source and a nitrogen-containing organic base, and thereafter preferably mixing the mixture and a hydroxycarboxylic acid and/or silane compound.

The temperature at which the hydrolyzed solution of the titanium source and the nitrogen-containing organic base are mixed is not particularly limited. The temperature is preferably from 2° to 200°C, more preferably from 10° to 150°C, and even more preferably from 20° to 100°C, from the viewpoint of stability of the nitrogen-containing organic base. The mixing time for the hydrolyzed solution of the titanium source and the nitrogen-containing organic base is preferably from 0.1 to 20 hours, and more preferably from 1 to 10 hours, from the viewpoint of increasing production efficiency.

After the hydrolyzed solution of the titanium source and the nitrogen-containing organic base are mixed, the mixture may be further subjected to a hydrothermal treatment at a temperature of 50° to 200°C from the viewpoint of increasing the strength of the formed coating film.

It is desired that the ratio of the titanium source to the nitrogen-containing organic base is adjusted so that the molar ratio of the titanium source to the nitrogen-containing organic base (titanium source/nitrogen-containing organic base) is from 0.01 to 10, preferably from 0.1 to 5, and more preferably from 0.2 to 2, from the viewpoint of increasing the strength of the formed coating film and stabilizing the coating film, and from the viewpoint of increasing production efficiency.

Here, when the hydrolyzed solution of the titanium source and an aqueous solution of the nitrogen-containing organic base are mixed, white turbidity may be generated in the mixture, and the mixture is continued stirring, whereby a colorless, transparent solution can be obtained.

### < Coating Agent of Embodiment 2 >

According to the embodiment 2, the coating agent can be prepared, not by mixing a hydrolyzed solution of a titanium source and a nitrogen-containing organic base, but by, for example, hydrolyzing a titanium source in the presence of a nitrogen-containing organic base, and thereafter preferably mixing the resulting mixture and a hydroxycarboxylic acid and/or a silane compound.

According to the embodiment 2, the coating agent can be prepared by a process, for example, including the steps of adding water to a mixture of a nitrogen-containing organic base and a titanium source, and preferably thereafter mixing the resulting mixture and a hydroxycarboxylic acid and/or a silane compound (hereinafter referred to as a process A); or a process including the steps of mixing an aqueous solution of a nitrogen-containing organic base and a titanium source, thereby hydrolyzing the titanium source, and preferably thereafter mixing the resulting hydrolysate and a hydroxycarboxylic acid and/or a silane compound (hereinafter referred to as a process B).

Each of the amount of water when water is added to the mixture in the process A or the amount of water usable in the aqueous solution in the process B may be an amount sufficient for hydrolyzing the titanium source. Usually, the amount of water is preferably from 5- to 50-folds, and more preferably from 10- to 15-folds, based on a total mass of the mixture of the nitrogen-containing organic base and the titanium source.

In the process A, the temperature of the mixture at which water is added is not particularly limited, and usually the temperature is preferably from 2° to 200°C, and more preferably from 20° to 100°C. In addition, the time period for dropping water is preferably from 0.01 to 5 hours, and more preferably from 0.02 to 2 hours. After the addition of water, it is preferable that the mixture is matured for about 0.1 to about 20 hours.

In the process B, the temperatures of the aqueous solution and the titanium source at which the aqueous solution and the titanium source are mixed are not particularly limited, and usually the temperatures are preferably from 2° to 200°C, and more preferably from 20° to 100°C, respectively. After mixing, it is preferable that the mixture is matured for about 0.1 to about 20 hours.

The titanium concentration upon use of the coating agent, as calculated in terms of titanium oxide (TiO₂), is preferably from 0.01 to 15% by mass, more preferably from 0.05 to 10% by mass, and even more preferably from 0.05 to 5% by mass, from the viewpoint of increasing productivity of the coating film and from the viewpoint of suppressing increase in viscosity of an agent. The titanium concentration as calculated in terms of titanium oxide (TiO₂) can be obtained by determining the number of moles of titanium atoms per unit weight of the coating agent by means of a fluorescent X-ray, and calculating the corresponding weight of the titanium oxide.

The titanium concentration in the coating agent may be adjusted by concentration, dilution, or the like of the coating agent prepared. In that case, the titanium concentration (concentration as calculated in terms of the mass of TiO₂) in the coating agent is preferably 40% by mass or less, more preferably 20% by mass or less, and even more preferably 10% by mass or less, from the viewpoint of storage stability of the coating agent. The titanium concentration is preferably 0.1% by mass or more, more preferably 1% by mass or more, and even more preferably 2% by mass or more, from the viewpoint of production efficiency of the film and physical properties of the film. The titanium concentration in the coating agent can be readily adjusted by adding or removing a solvent.

The kinds of the solvent used for adjusting the titanium concentration in the coating agent are not particularly limited. Examples of the solvent include water, organic solvents, and mixed solvents thereof. The water includes, for example, ion-exchanged water, and the like. In addition, the organic solvent includes an alcohol such as methanol, ethanol, or isopropyl alcohol. The solvents can be used alone or in admixture of two or more kinds. The mixed solvent of water and an organic solvent includes a water-based solvent.

Here, the term "water-based solvent" as used herein refers to a solvent having a water content of 30% by weight or more in the solvent usable in the coating agent of the present invention. Also, the term "organic solvent" as used herein refers to a solvent having a water content of less than 30% by weight in the solvent usable in the coating agent of the preset invention.

In the present invention, since a water-based solvent is added after removing a solvent from the coating agent, a water-based coating agent in which a water-based solvent that is different from the solvent used in the production of the coating agent is used, can be produced. In addition, since an organic solvent is added after removing the solvent from the coating agent, an organic solvent-based coating agent in which an organic solvent that is different from the solvent used in the production of the coating agent is used, can be produced.

The organic solvent-based coating agent can be also obtained by mixing a nitrogen-containing organic base, a titanium source, an organic solvent, and optionally a hydroxycarboxylic acid and/or a silane compound. In this case, the organic solvent may be previously mixed with the nitrogen-containing organic base, the titanium source, the hydroxycarboxylic acid, or the silane compound; alternatively, the nitrogen-containing organic base, the titanium source, and optionally the hydroxycarboxylic acid and/or the silane compound may be mixed, and thereafter the mixture may be mixed with the organic solvent. The organic solvent-based coating agent may be also obtained by a process including the steps of mixing a nitrogen-containing organic base, a titanium source, and optionally a hydroxycarboxylic acid and/or a silane compound, thereafter removing water from the mixture, and then mixing again the residue and an organic solvent.

The process of removing water includes a process of evaporating moisture while heating, a process of evaporating moisture under a reduced pressure, a process of dehydrating moisture with an adsorbent; and the like. In the case of the process of evaporating moisture while heating, a drying temperature is preferably 200°C or less, and more preferably 150°C or less. The drying time may be properly set according to a desired dryness, and usually the drying time is preferably from 1 to 72 hours, and more preferably from 5 to 24 hours.

The water content of the powder obtained is preferably 10% by mass or less, and more preferably 5% by mass or less.

The titanium concentration in the organic solvent-based coating agent, as calculated in terms of titanium oxide (TiO₂), is preferably from 0.01 to 20% by mass, more preferably from 0.01 to 15% by mass, even more preferably from 0.05 to 10% by mass, and even more preferably from 0.05 to 5% by mass.

The organic solvent usable in the organic solvent-based coating agent has a boiling point of preferably from 20° to 300°C, more preferably from 30° to 200°C, and even more preferably from 30° to 130°C, from the viewpoint of increasing production efficiency of a coating film.

As the organic solvent, alcohol-based organic solvents such as methanol, ethanol, isopropyl alcohol, n-butyl alcohol, and isopentyl alcohol; oxygen-containing organic solvents such as acetone and tetrahydrofuran; nitrogen-containing organic solvents such as acetonitrile; propylene carbonate; and the like are preferable.

Since the resulting coating agent has a pH of preferably from 2 to 9.5, the coating agent can be applied in a variety of applications in a wide pH region from weak basicity to acidity.

Since the coating agent of the present invention is obtainable by contacting the hydrolyzed solution of the titanium source with the nitrogen-containing organic base, it is considered that the coating agent contains a compound having a structure of a titanate sheet as the titanium-containing compound in the present invention.

The term "titanate sheet" as used herein refers to a substance (1) containing a titanium atom, and (2) having signals of Raman spectrum in the regions of the wave number of from 260 to 305 cm⁻¹, from 440 to 490 cm⁻¹, and from 650 to 1000 cm⁻¹, respectively.

Examples of preferred titanate sheet include titanic acids having a structure of dititanate, trititanate, tetratitanate, pentatitanate, hexatitanate, lepidocrocite-type, and the like.

In anatase-type titania, which is a conventional representative titanium oxide, peaks of Raman spectrum thereof are observed in the regions of the wave number of from 140 to 160 cm⁻¹, from 390 to 410 cm⁻¹, from 510 to 520 cm⁻¹, and from 630 to 650 cm⁻¹. In rutile-type titania, peaks of Raman spectrum thereof are observed in the regions of the wave number of from 230 to 250 cm⁻¹, from 440 to 460 cm⁻¹, and from 600 to 620 cm⁻¹.

According to the conventional findings, it has been deduced that the titanate sheet comprising an octahedral structure in which six oxygen atoms are coordinated to a central titanium atom as basic units, the units being arranged and spread in nano-order size in plane.

It is considered that the titanate sheet usable in the present invention contains, for example, a nitrogen-containing organic base in the form of a salt with a titanic acid.

The deduction that a titanate sheet containing a nitrogen-containing organic base is formed in the coating agent is made based upon the following measurement.

(1) The Raman spectrum measurement of a coating agent is carried out by measuring by transmission method using an argon ion-laser (wavelength of 488 nm) as a light source, with a laser output of from 100 to 600 mW and an integration time of from 30 to 300 seconds, using a CCD camera as a detector, and determining the spectrum based on 5154 data points measured in the region of the wave number of from 100 to 1100 cm⁻¹. A concentration of the coating agent provided for measurement is adjusted to have a concentration of 5% by weight, as calculated in terms of titanium oxide.

(2) A powder obtained by drying a coating agent solution at a temperature of 100°C for 12 hours or more in an atmospheric pressure is subjected to the following measurements.

(3) Titanium is quantitatively analyzed with a fluorescent X-ray analyzer (manufactured by Rigaku Corporation, product number: ZSX100E); and carbon, hydrogen, and nitrogen are quantitatively analyzed with a fully automatic element analyzer (manufactured by PerkinElmer, product number: 2400II, column separation system, TCD detection).

(4) In the Raman spectrum measurement, when the signals are observed in the regions of wave number of from 260 to 305 cm⁻¹, from 440 to 490 cm⁻¹, and from 650 to 1000 cm⁻¹, respectively, and the titanium atoms and the titanate sheet structure are derived therefrom, it can be deduced that the coating agent contains a titanate sheet structure containing the nitrogen-containing organic base.

In an ultraviolet absorption spectrum of the titanate sheet containing the nitrogen-containing organic base, a rise-up wavelength (absorption edge) in the absorption spectrum is found within the region of a wavelength of from 300 to 340 nm. On the other hand, in an ultraviolet absorption of the anatase-type titania, a rise-up wavelength (absorption edge) in the absorption spectrum is found within the region of a wavelength of from 360 to 380 nm, and in an ultraviolet absorption of the rutile-type titania, an absorption edge in the absorption spectrum is found within the region of from 400 to 420 nm.

It is considered that the titanate sheet has the above structure, so that the titanate sheet is favorably dispersed in an aqueous solvent or organic solvent, whereby ease in handling as a coating agent for an optical instrument can be secured.

In addition, the titanate sheet containing the nitrogen-containing organic base has its absorption edge on a shorter wavelength side, as compared to those of the anatase-type titania and the rutile-type titania, so that the amount of absorption of ultraviolet rays (UV-A and UV-B) is in a smaller quantity, thereby having an advantage that the titanate sheet has a low photocatalytic activity. Therefore, it is considered that the titanate sheet is preferable from the viewpoint of stability (light fastness) of a coating agent for an optical instrument and a coating film, as compared to the anatase-type titania and the rutile-type titania.

A molar ratio of nitrogen atom to titanium atom in the coating agent of the present invention, i.e. nitrogen atom / titanium atom, is preferably from 0.01 to 10, more preferably from 0.1 to 5, and even more preferably from 0.2 to 2, because the coating film of the present invention can be easily formed. This molar ratio can be easily controlled by properly adjusting the amounts of the titanium source and the nitrogen-containing organic base.

In addition, the pH (at 25°C) of the coating agent is preferably from 3 to 13, and more preferably from 6 to 12, because it is considered that versatility of the coating agent is increased and the structure of the titanate sheet in the coating agent can be stabilized. The pH of the coating agent can be easily adjusted by, for example, properly adding an acid or a base thereto.

In the coating agent of the present invention, a titanium-containing species other than the titanic acids, such as a titanium alkoxide (for example, titanium tetraisopropoxide), anatase-type titania, and rutile-type titania may coexist. In this case, however, the concentration of the titanium-containing species other than the titanic acids, as calculated in terms of the mass of TiO₂, is adjusted so that the titanium-containing species is formulated in an amount of preferably 50% by mass or less, more preferably 20% by mass or less, even more preferably 10% by mass or less, and still even more preferably 0%, of the titanium concentration, from the viewpoint of storage stability of the coating agent and physical properties of a film. The kinds of the titanium in the coating agent can be identified by Raman spectroscopy, as in the same manner as the case of the titanate sheet.

The coating agent of the present invention may contain a metal oxide as an optional component for the purpose of adjusting a refractive index. The metal oxide includes, for example, aluminum oxide, antimony oxide, zirconium oxide, niobium oxide, silicon oxide, cerium oxide, iron oxide, calcium oxide, magnesium fluoride, calcium fluoride, and the like.

The coating agent of the present invention can also optionally contain fine metal oxide particles for adjusting a refractive index thereof to that of a lens, a curing agent for accelerating the reaction, and various kinds of organic solvents or surfactants for improving wettability upon application of the coating agent as well as slidability of a coating film. Furthermore, an ultraviolet absorbent, an antioxidant, a photostabilizer or the like can be added in an amount within the range that does not harm physical properties of a coating film.

The fine metal oxide particles include, for example, fine particles of a metal oxide such as aluminum oxide, titanium oxide, antimony oxide, zirconium oxide, silicon oxide, cerium oxide, or iron oxide, and the present invention is not limited only to those exemplified above.

Examples of the curing agent include amines such as allylamine and ethylamine; metal salts with various kinds of acids and bases including Lewis acids and Lewis bases, including, for example, an organic carboxylic acid, chromic acid, hypochlorous acid, boric acid, perchloric acid, bromic acid, selenious acid, thiosulfuric acid, orthosilicic acid, thiocyanic acid, nitrous acid, aluminic acid, carbonic acid, or the like; metal alkoxides with aluminum, zirconium, or titanium, or metal chelating compounds thereof; and the like. In addition, preferred curing agents for forming transparent coating film include, for example, polyvinyl butyrals, polyvinyl alcohols, celluloses, melamine resins, epoxy resins, acrylic resins, and the like.

The coating agent of the present invention can be usually cured by using a hot air or irradiating with activated energy rays. The coating agent can be cured by using a hot air at a temperature of preferably from 70° to 200°C, and more preferably a hot air at a temperature of from 90° to 150°C. The activated energy rays include far-infrared rays and the like, and the activated energy rays can suppress damages caused by the heat to a low level.

The coating agent of the present invention has advantages of readily forming a coating film, so that the coating film has appropriate hardness and excellent transparency and a low photocatalytic activity. Therefore, the coating agent of the present invention can be suitably used for a coating film for an optical instrument.

More specifically, the coating agent of the present invention can be suitably used for a coating film which is usable, for example, in lenses of spectacles, lenses for cameras, window glass of automobiles, optical filters attached to displays of word processors, computers, and the like, which can be particularly suitably used in a hard coating film for plastic lenses. Especially, the coating film for an optical instrument in which the nitrogen-containing organic base having a boiling point of 300°C or less at an atmospheric pressure of 1013 hPa is used has high hardness, and excellent rubbing resistance and excellent adhesibility to a substrate as well as favorable light transmittance and low photocatalytic activity, so that the coating film can be suitably used as a hard coating film for plastic lenses of spectacles.

The coating film of the present invention can be formed by applying the coating agent of the present invention.

It is preferable that the content of titanium in the coating film of the present invention is appropriately determined according to its applications, kinds of substrates to be applied, and the like. The titanium content can be estimated in terms of the content of titanium oxide. The titanium content, as calculated in terms of titanium oxide, in the coating film is preferably from 2 to 99% by weight, from the viewpoint of forming a coating film having high hardness, high rubbing resistance, and strong adhesibility.

It is deduced that the titanate sheet forms a layered structure (hereinafter also referred to as a "layered titanate") in the coating film of the present invention.

The term of "layered titanate" as used herein refers to a substance (1) containing titanium atom, and (2) having signals of Raman spectrum in the regions of wave number of from 260 to 305 cm⁻¹, from 440 to 490 cm⁻¹, and from 650 to 1000 cm⁻¹, respectively.

Since it is confirmed by X-ray diffraction that the larger the size of the nitrogen-containing organic base becomes, the more the lattice plane spacing increases, the structure which is considered to be layer spacing of the layered titanate in the coating film in the present invention is a structure in which the nitrogen-containing organic base exists between the layers of the layered titanate.

The deduction that the layered titanate containing the nitrogen-containing organic base is formed in the coating film is made on the basis of the following measurements.

(1) The Raman spectrum measurement of a coating agent is carried out by measuring by transmission method using an argon ion-laser (wavelength of 488 nm) as a light source, with a laser output of from 100 to 600 mW and an integration time of from 30 to 300 seconds, using a CCD camera as a detector, and determining the spectrum based on 5154 data points measured in the region of the wave number of from 100 to 1100 cm⁻¹. The coating agent provided for measurement is adjusted to have a concentration of 5% by weight as calculated in terms of titanium oxide.

(2) A powder obtained by drying a coating agent solution at a temperature of 100°C for 12 hours or more in an atmospheric pressure is subjected to the following measurements.

(3) Titanium is quantitatively analyzed with a fluorescent X-ray analyzer (manufactured by Rigaku Corporation, product number: ZSX100E); and carbon, hydrogen, and nitrogen are quantitatively analyzed with a fully automatic element analyzer (manufactured by PerkinElmer, product number: 2400II, column separation system, TCD detection).

(4) In the Raman spectrum measurement, when the signals are observed in the regions of the wave number of from 260 to 305 cm⁻¹, from 440 to 490 cm⁻¹, and from 650 to 1000 cm⁻¹, respectively, it is deduced that a structure of a layered titanate is contained.

It is desired that the coating film of the present invention has a hardness, in terms of pencil hardness according to the pencil hardness method prescribed in JIS K-5400, of F or higher, preferably 4H or higher, more preferably 6H or higher, and even more preferably 8H or higher.

The coating film of the present invention has a film thickness of preferably 10 µm or less, more preferably 5 µm or less, even more preferably 3 µm or less, and still even more preferably 1 µm or less, from the viewpoint of increasing transparency of the film. The coating film has a film thickness of preferably 10 nm or more, more preferably 20 nm or more, even more preferably 50 nm or more, and still even more preferably 100 nm or more, from the viewpoint of increasing hardness of the coating film. The film thickness of the coating film of the present invention can be determined with an electron microscope.

The coating film of the present invention may be formed by using a water-based coating agent or an organic solvent-based coating agent as the coating agent of the present invention.

In the formation of the coating film of the present invention, a substrate can be subjected to pre-treatment in advance for the purposes of increasing cleanliness and adhesibility, and improving water resistance, and the like.

As a preferred pre-treatment, by subjecting to, for example, an activated gas treatment, a chemical treatment with an alkali or various organic solvents, a physical treatment with plasma, ultraviolet rays, or the like, a detergent treatment with various detergents, a sand-blast treatment, and further a primer treatment with various resins, the adhesibility between a substrate and a cured film, or the like can be improved.

The process of applying the coating agent of the present invention to a substrate is not particularly limited. The application method includes, for example, conventional methods such as a spin-coating method, a dip-coating method and a spray-coating method. Among these methods, the spin-coating method and the dip-coating method are preferable, from the viewpoint of formation efficiency of the coating film and evenness of the formed coating film.

After the coating agent is applied to a substrate, it is preferable that the substrate is subjected to a heat treatment. It is preferable that the heat treatment temperature is a temperature equal to or higher than the boiling point of the nitrogen-containing organic base or the solvent, from the viewpoint of efficiently removing residual organic substances, thereby increasing the hardness of the coating film. Also, it is preferable that the heat treatment temperature is a temperature equal to or lower than the decomposition temperature of the nitrogen-containing organic base, because carbonaceous residues may be generated in some cases when the nitrogen-containing organic base is thermally decomposed, and the residues in turn cause coloration or decrease of transparency. The heat treatment temperature is preferably 450°C or less, more preferably 350°C or less, and even more preferably from 250° to 80°C, from the viewpoint of structural stability of the titanium-containing compound in the present invention and suppression of phase transition of the titanium-containing compound to titania.

The heat treatment time cannot be unconditionally determined, because the heat treatment time depends upon the heat treatment temperature. The heat treatment time is preferably 15 minutes or more, more preferably 20 minutes or more, and even more preferably 30 minutes or more, from the viewpoint of efficiently removing residual organic substances, thereby increasing hardness of the film. Also, the heat treatment time is preferably 24 hours or less, more preferably 12 hours or less, and even more preferably 5 hours or less, from the viewpoint of efficiently forming the coating film.

The hardness of the coating film tends to increase as the molar ratio of nitrogen atom of the nitrogen-containing organic base to titanium atom of the layered titanate, i.e. nitrogen atom / titanium atom, becomes smaller.
In addition, as the curing temperature becomes higher and the curing time becomes longer, there is a tendency that the nitrogen-containing organic base contained in the coating film is evaporated, thereby lowering a molar ratio of nitrogen atom to titanium atom, i.e. nitrogen atom / titanium atom, in the coating film, whereby giving a preferred structure. This molar ratio of nitrogen atom / titanium atom is from 0.01 to 0.3, preferably from 0.01 to 0.25, and more preferably from 0.05 to 0.24, from the viewpoint of forming a coating film having high hardness.

An optical instrument of the present invention is one comprising a coating film for an optical instrument of the present invention. For example, the coating film can be formed on an optical instrument by applying a coating agent for an optical instrument of the present invention thereto.

The preferred optical instrument comprising the coating film of the present invention includes lenses of spectacles, lenses for cameras, window glass of automobiles, optical filters attached to a display for word processors, and the like, from the viewpoint of easiness in film formation, exhibition of hardness, transparency of the film and low photocatalytic activity.

### EXAMPLES

### Example 1 (Production of Coating Agent)

The amount 28.42 g (100 mmol) of titanium tetraisopropoxide was dissolved in 10 mL of isopropyl alcohol, to give a titanium alkoxide solution.

Distilled water was added to 7.31 g (100 mmol) of diethylamine to make up 160 g of an aqueous diethylamine solution. The previously prepared titanium alkoxide solution was gradually dropped into this aqueous diethylamine solution at room temperature while stirring. Along with the dropping, titanium tetraisopropoxide was hydrolyzed to make the solution into white turbid. The mixture was continued stirring to eventually give a colorless, transparent solution. In the colorless, transparent solution, the titanium concentration, as calculated in terms of TiO₂, was about 5% by mass, and a molar ratio of nitrogen atom of the diethylamine to titanium atom of the titanium alkoxide, i.e. nitrogen atom / titanium atom, was 1.

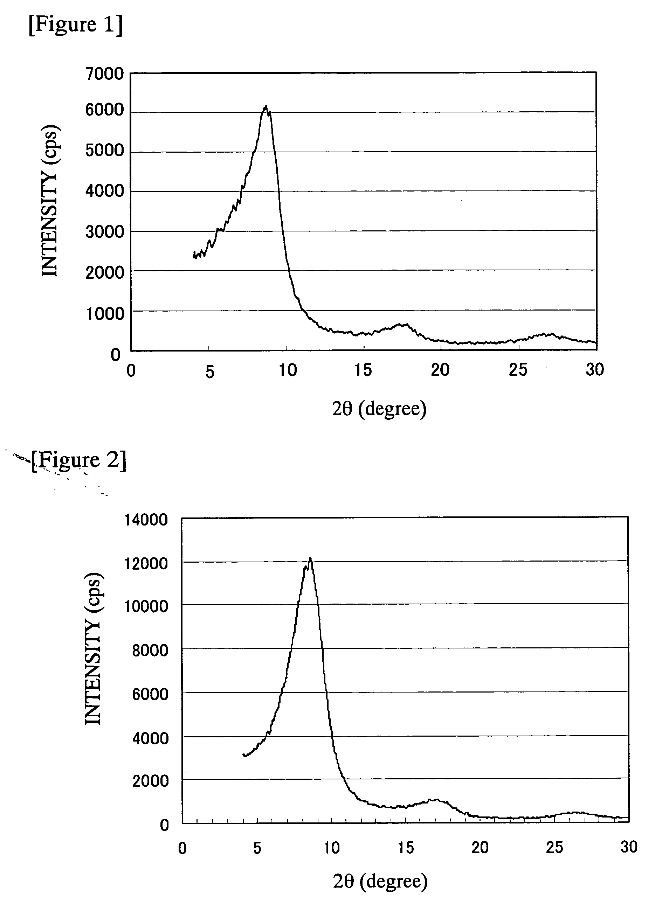

A few drops of the colorless transparent solution obtained were dropped on a glass plate and dried to obtain a film. The film obtained was subjected to an X-ray diffraction analysis. The results are shown in Figure 1. According to the X-ray diffraction chart shown in Figure 1, a main peak (a first peak) was found at a d-value of around 9.87 (8.95 degrees at an angle 2θ) and a second peak was observed at a d-value of around 5.11 (17.32 degrees at an angle 20). Therefore, it could be deduced that the layered titanate formed had a layered structure in which organic cations are interposed between the layers.

Also, the colorless, transparent solution was analyzed by a Raman spectroscopy. As a result, peaks peculiar to the lepidocrocite type titanate as the layered titanate were observed at the wave numbers of around 278 cm⁻¹, around 442 cm⁻¹, and around 702 cm⁻¹.

The absorptions observed in the above-mentioned three regions of the wave numbers in the Raman spectrum are peculiar to the layered titanate because ordinary titanium oxides do not show the three absorption peaks as mentioned above. It can be deduced from this fact one that contains titanium and has absorptions in the above-mentioned three regions of the wave numbers in the Raman spectrum has a backbone structure of the layered titanate. The layer spacing thereof can be deduced from the regular peaks in an X-ray diffraction.

### Example 2 (Production of Coating Film)

Microslide glass (manufactured by Matsunami Glass, length: 76 mm, width: 52 mm, thickness: 1.3 mm) of which surface stains were sufficiently washed with water and 2-propanol, was attached to a dip coater. Entire surface of this slide glass was dipped in any of various coating solutions at a rate of 40 cm/minute, allowed to stand therein for 10 seconds, and then pulled out from the solution at a rate of 40 cm/minute. This glass was dried at a curing temperature and curing time as shown in Table 1. Thereafter, the dried glass was evaluated for pencil hardness, rubbing resistance, and adhesibility in accordance with the following methods. The results are shown in Table 1.

### (1) Pencil Hardness

According to the method prescribed in JIS K-5400, the maximum hardness at which no scratches are generated was shown.

### (2) Rubbing Resistance

A glass surface was repeatedly rubbed for 5 or 50 times with a steel wool #0000 to which a load of 1 kg was applied, the rubbing procedure of reciprocating the steel wool once per 1 second. The rubbing resistance was evaluated in accordance with the following criteria.

### [Evaluation Criteria]

A: area of the film that is lost by rubbing 50 times being less than half;
B: area of the film that disappears by rubbing 50 times being half or more;
C: area of the film that disappears by rubbing 5 times being less than half; and
D: area of the film that disappears by rubbing 5 times being half or more, but not completely disappearing.
E: The film completely disappearing by rubbing 5 times.

### (3) Adhesibility (Cross-Cut Method/Cross-Cut Test)

The adhesibility of the coating film of the present invention to a substrate can be determined by a cross-cut tape method as prescribed in JIS K-5400, or the like. The adhesibility of the coating film of the present invention to a substrate was evaluated by a cross-cut tape method in which the number of squares which remained unpeeled in the 100 squares is preferably from 95 to 100, more preferably from 98 to 100, and even more preferably 100. Specifically, the adhesibility was evaluated as follows.

Cross-cut squares reaching to a substrate placed 1 mm from a coated surface were cut out into 100 pieces from the coating film with a brand new knife. The squares were firmly pasted with a cellophane adhesive tape (manufactured by NICHIBAN CO., LTD.), and then quickly removed to count the number of cross-cut squares remaining on the substrate for evaluating adhesibility. The adhesibility of the current test was evaluated as being favorable because no removal was found in the coating film. It is judged in each of Examples and Comparative Examples that when the tests were conducted at the same temperature and adhesibility is found to be favorable when the curing time was two hours, adhesibility would be still favorable even when cured at a curing time that is even longer.

In Experimental Examples 1 to 15 as shown in Table 1, the coating agent obtained in Example 1 was used, and in Comparative Experimental Examples 1 to 15, commercially available titanium oxide sol (commercially available from TAKI CHEMICAL CO., LTD., product code: M6) was used.

**[Table 1]**

| | Curing Temp. (°C) | Curing Time | Pencil Hardness | Rubbing Resistance | Adhesibility |
|---|---|---|---|---|---|
| Exp. Ex. 1 | 50 | 2h | F | D | Excellent |
| Exp. Ex. 2 | 50 | 4h | F | D | - |
| Exp. Ex. 3 | 50 | 6h | H | D | - |
| Exp. Ex. 4 | 50 | 22h | H | D | - |
| Exp. Ex. 5 | 100 | 2h | F | D | Excellent |
| Exp. Ex. 6 | 100 | 4h | F | D | - |
| Exp. Ex. 7 | 100 | 6h | H | C | - |
| Exp. Ex. 8 | 100 | 22h | 2H | B | - |
| Exp. Ex. 9 | 150 | 2h | F | B | Excellent |
| Exp. Ex. 10 | 150 | 4h | H | B | - |
| Exp. Ex. 11 | 150 | 6h | 2H | A | - |
| Exp. Ex. 12 | 150 | 22h | 3H | A | - |
| Exp. Ex. 13 | 200 | 2h | 4H | A | Excellent |
| Exp. Ex. 14 | 200 | 4h | 5H | A | - |
| Exp. Ex. 15 | 200 | 6h | 8H | A | - |
| Comp. Exp. Ex. 1 | 50 | 2h | <6B | E | Excellent |
| Comp. Exp. Ex. 2 | 50 | 4h | <6B | E | - |
| Comp. Exp. Ex. 3 | 50 | 6h | <6B | E | - |
| Comp. Exp. Ex. 4 | 50 | 22h | <6B | E | - |
| Comp. Exp. Ex. 5 | 100 | 2h | <6B | E | Excellent |
| Comp. Exp. Ex. 6 | 100 | 4h | <6B | E | - |
| Comp. Exp. Ex. 7 | 100 | 6h | <6B | E | - |
| Comp. Exp. Ex. 8 | 100 | 22h | <6B | E | - |
| Comp. Exp. Ex. 9 | 150 | 2h | <6B | E | Excellent |
| Comp. Exp. Ex. 10 | 150 | 4h | <6B | E | - |
| Comp. Exp. Ex. 11 | 150 | 6h | <6B | E | - |
| Comp. Exp. Ex. 12 | 150 | 22h | <6B | E | - |
| Comp. Exp. Ex. 13 | 200 | 2h | <6B | E | Excellent |
| Comp. Exp. Ex. 14 | 200 | 4h | <6B | E | - |
| Comp. Exp. Ex. 15 | 200 | 6h | <6B | E | - |

It can be seen from the results shown in Table 1 that the coating agents for an optical instrument obtained form a coating film having high hardness, high rubbing resistance, and strong adhesibility in each of Experimental Examples, without necessitating a high-temperature treatment as in a conventional method.

Experimental Examples 1 to 15 and Comparative Experimental Examples 1 to 15 are cases where the coating was carried out on a glass substrate. However, the physical properties of a coating film will differ depending upon the kinds of a substrate to be coated, so that the physical properties of a coating film when applied to a plastic lens were evaluated.

### Example 3

The coating agent obtained in Example 1 was applied to a plastic lens in accordance with the following methods, and pencil hardness, rubbing resistance, and adhesibility were evaluated in the same manner as described above.

### [Coating the Coating Agent on Plastic Lens]

### (1) Cleaning Plastic Lens

A plastic lens (manufactured by Japan Laboratory K.K., refractive index: 1.67, thiourethane-based resin) was cleaned by dipping the plastic lens in a 10% aqueous sodium hydroxide for 10 minutes, and thereafter the plastic lens was sufficiently rinsed with ion-exchanged water, further cleaned with isopropyl alcohol, and then dried for 1 hour with a hot air dryer at 40°C.

### (2) Production of Coating Film

The cleaned plastic lens was attached to a dip coater, and dipped for 20 seconds in the coating agent obtained in Example 1 previously temperature-controlled to 25°C, and the plastic lens was pulled out at a rate of 60 mm/minute, and dried at room temperature for 30 minutes. Thereafter, the lens air-dried was transferred to a dryer, and a curing reaction was carried out at a temperature of 95°C for 20 minutes, and further at a temperature of 110°C for 4 hours, to form a coating film having a thickness of about 0.9 µm on the surface of the plastic lens.

### Example 4

### (1) Production of Coating Agent

An aqueous amine solution prepared by dissolving 0.1 mol (7.314 g) of diethylamine in 160 g of distilled water was stirred, and a solution prepared by dissolving 0.1 mol (28.422 g) of titanium tetraisopropoxide [Ti(OiPr)_{4]} in 10 mL of 2-propanol was dropped as a titanium source to the aqueous amine solution. The solution became white turbid along with the dropping, and the mixture was continued stirring, to give a transparent solution 1.

To this transparent solution 1 was dropped an aqueous citric acid solution prepared by dissolving 0.033 mol (6.404 g) of citric acid in 30 g of distilled water, to give a transparent solution 2 of which pH after the dropping was about 7.

This transparent solution was placed in a vat made of a fluororesin, and dried with a dryer at 100°C for 8 hours to give a dry powder 3 having a pale yellow color. The amount 15.66 g of the dried powder 3 was added to 16.21 g of methanol, and the mixture was mixed at room temperature for 2 hours while stirring to obtain a pale-yellow, transparent methanol dispersion.

To a solution prepared by dissolving 15.66 g of γ-glycidoxypropyl trimethoxysilane in 7.87 g of methanol was dropped 5.51 g of a 0.01 N aqueous hydrochloric acid over a period of about 10 minutes, and thereafter the mixture was stirred for a period of twice around the clock, to give a hydrolysate. To this hydrolysate obtained were sequentially added 31.87 g of the above-mentioned methanol dispersion, 5.51 g of 2-ethoxyethanol, 0.24 g of aluminum acetyl acetone, and then 0.02 g of SILWET L-7001 (manufactured by Dow Corning-Toray Co., Ltd.), and thereafter the mixture was again stirred for a period of twice around the clock. Thereafter, 33.33 g of methanol was added thereto as a viscosity-adjusting agent to give a coating agent.

### (2) Production of Coating Film

The cleaned plastic lens was attached to a dip coater. The lens was dipped for 20 seconds in the above-mentioned coating agent previously temperature-controlled at 25°C, and the plastic lens was pulled out at a rate of 60 mm/minute, and dried at room temperature for 30 minutes. Thereafter, the lens was transferred to a dryer, and a curing reaction was carried out at a temperature of 95°C for 20 minutes, and further at a temperature of 110°C for 4 hours, to form a coating film having a thickness of about 1.5 µm on the surface of the plastic lens.

### Comparative Example 1

A plastic lens was coated in the same manner as in Example 3, except that a commercially available titanium oxide sol (manufactured by TAKI CHEMICAL CO., LTD., product number: M6) was used in Example 3, in place of the titanium oxide of the coating agent obtained in Example 1. The coated plastic lens was evaluated for pencil hardness, rubbing resistance, and adhesibility in the same manner as above.

### (3) Adhesibility of Coating Film to Plastic Lens

The adhesibility was evaluated in the same manner as in the above-mentioned "(3) Adhesibility." Here, the evaluation results were given so that the number of cross-cut squares remaining unremoved among 100 cross-cut squares was expressed as a value of (the number of squares remaining unremoved) divided by 100.

The above results are shown in Table 2.

**[Table 2]**

| | Pencil Hardness | Rubbing Resistance | Adhesibility |
|---|---|---|---|
| Ex. 3 | F | D | 95/100 |
| Ex. 4 | 4H | C | 100/100 |
| Comp. Ex. 1 | <6B | E | 50/100 |

It can be seen from the above results that the coating agent obtained in Example 4 is formulated with a silane coupling agent, so that the physical properties of the film (pencil hardness, rubbing resistance, and adhesibility) for plastic materials can be improved.

### [Structure Analysis of the Products]

The transparent solution 1 obtained in Example 4 was dropped on a glass substrate, and dried, to give a thin film. The dried thin film was analyzed by an X-ray diffraction method, and the solution itself was analyzed by a Raman spectroscopy. As a result, in the X-ray diffraction pattern, peaks are found near 2θ = 8.54° (d = 1.035 nm) and 16.62° (d = 0.533 nm) (see Figure 2). It can be deduced from the above that this thin film is a layered titanate having a distance between the layers of about 1 nm. In addition, this thin film is considered to be a lepidocrocite-type titanate sheet from the results of the Raman spectroscopy mentioned above.

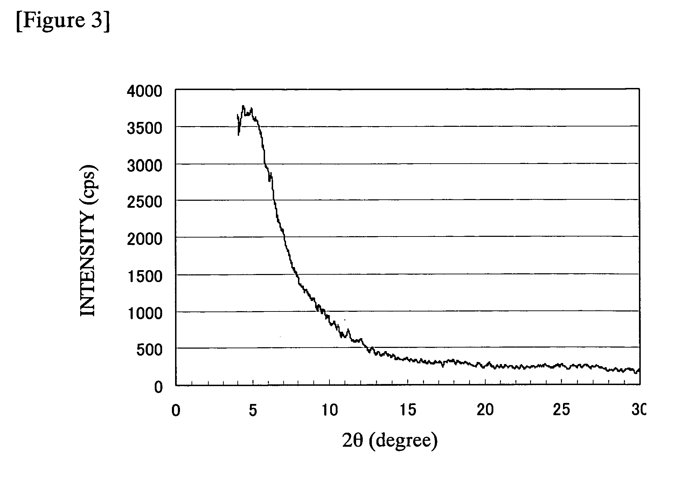

A few drops of the transparent solution 2 were dropped on a glass substrate, and dried, and the product was confirmed with the above-mentioned X-ray diffractometer mentioned above. As a result, it is deduced that a layered titanate having a distance between the layers of about 1.9 nm was formed (see Figure 3). In addition, it is considered that the titanate sheet was a lepidocrocite-type titanate sheet from the results of the Raman spectroscopy mentioned above.

It is considered that a lepidocrocite-type titanate sheet was formed from the results of the measurement of the Raman spectroscopy mentioned above of the dried powder 3.

### BRIEF DESCRIPTION OF THE DRAWINGS

[Figure 1] An X-ray diffraction chart of a film produced by drying a colorless, transparent solution obtained in Example 1.
[Figure 2] An X-ray diffraction chart of a film produced by drying a transparent solution 1 obtained in Example 4.
[Figure 3] An X-ray diffraction chart of a film produced by drying a transparent solution 2 obtained in Example 4.

## Claims

1. A coating agent for an optical instrument, obtainable under the conditions where one or more titanium sources selected from the group consisting of titanium alkoxides and titanium salts, a nitrogen-containing organic base, and water are co-present.

2. A coating agent for an optical instrument, obtainable by mixing a hydrolyzed solution of one or more titanium sources selected from the group consisting of titanium alkoxides and titanium salts, and a nitrogen-containing organic base.

3. The coating agent for an optical instrument according to claim 1 to 2, obtainable by further mixing a hydroxycarboxylic acid and/or a silane compound.

4. A coating agent for an optical instrument, obtainable by hydrolyzing one or more titanium sources selected from the group consisting of titanium alkoxides and titanium salts, in the presence of a nitrogen-containing organic base.

5. The coating agent for an optical instrument according to claim 4, obtainable, subsequent to hydrolysis, by further adding a hydroxycarboxylic acid and/or a silane compound thereto.

6. The coating agent for an optical instrument according to claim 5, wherein the hydroxycarboxylic acid is one or more members selected from the group consisting of glycolic acid, lactic acid, mandelic acid, malic acid, citric acid, glyceric acid, and tartaric acid.

7. The coating agent for an optical instrument according to any one of claims 1 to 6, wherein the nitrogen-containing organic base has a boiling point at 1013 hPa of 300°C or less.

8. The coating agent for an optical instrument according to any one of claims 1 to 6, wherein the nitrogen-containing organic base is one or more members selected from the group consisting of primary amines, secondary amines, tertiary amines and quaternary ammonium hydroxide.

9. A process for producing a coating agent for an optical instrument, comprising the step of forming a titanium-containing compound in the coexistence of one or more titanium sources selected from the group consisting of titanium alkoxides and titanium salts, a nitrogen-containing organic base, and water.

10. A coating film for an optical instrument formed by applying the coating agent for an optical instrument as defined in any one of claims 1 to 6.

11. An optical instrument comprising the coating film for an optical instrument as defined in claim 10.

12. A process for producing a coating film for an optical instrument, comprising the step of applying the coating agent for an optical instrument as defined in any one of claims 1 to 6.

13. A process for producing an optical instrument comprising a coating film for an optical instrument, comprising the step of applying the coating agent for an optical instrument as defined in any one of claims 1 to 6.
